# EUROPEAN PATENT APPLICATION

(11) **EP 1 095 553 A1**
(43) Date of publication of application: **02.05.2001**
(21) Application number: 00830703.5
(22) Date of filing: 25.10.2000
(51) Int. Cl.: A01D 34/86

(54) **Drive mechanism for the trituration device of a shredder**

(30) Priority: 29.10.1999 IT RM990674
(71) Applicant: Corsetti, Angelo, 03032 Arce (FR) (IT)
(72) Inventor: Corsetti, Angelo, 03032 Arce (FR) (IT)
(74) Representative: Fiammenghi-Domenighetti, Delfina

(57) **Abstract**

A drive mechanism for the trituration device (4) of a shredder, including a support (3) allowing the connection of the mechanism to accessories supporting arms (2, 2') of a tractor, and comprising also a driving device (6) with a four-bar linkage configuration, connected at its upper end in an articulated manner to the support (3). By means of said device having a four-bar linkage configuration (6) it is possible to displace the trituration device (4), laterally with respect to the shredder profile, and parallely with respect to the ground and orthogonally to the instantaneous advancement direction of the shredder.

## Description

The present invention relates to a drive mechanism for the trituration device of a shredder.
A shredder is a machine used for triturating weeds, blackberry bushes, thickets, and everything which infests fields under cultivation, and particularly orchards, olive-yards, vineyards, and hedges between farms.
In general, it may also be used for other applications, not related to the agricultural field, e.g. for the care of ditch edges or the "cleanliness" of road embankments. The latter possibility is given by the fact that the trituration device of a shredder may be inclined by a "negative" or by a "positive" angle, in order to act on inclined surfaces (for instance along a ditch), or may be set in a vertical position (for instance during hedge cutting).

Conventional shredders may be classified according to two standard categories:
- Shredders whose trituration device is stationary, that is not movable with respect to the shredder body, and always located behind the tractor, so as to perfectly follow the "trail" of the tractor. In this case, obviously, the fact that the trituration device cannot be moved constitutes a limitation during the performance of certain works, in those cases in which the tractor is unable to reach the surface to be worked.
- Shredders with controllable (that is movable) trituration device.
The latter category comprises shredders whose trituration device is driven by an arm with multiple hinges and various hydraulic cylinders, which is mounted on the rear side of the shredder. Also in this case it is clear that the hinged arm has large dimensions, which makes impossible the use of the shredder in case of limited space (e.g. between rows of vines, etc.).
Moreover, conventional shredders whose drive mechanism is arranged so as to move the trituration device on a horizontal plane and along a circle arc, have the obvious drawback of a difficult manoeuvrability of the trituration device, when the shredder moves past an obstacle located laterally with respect to its "trail". In this circumstance, the operator must prevent the trituration device from hitting the obstacle, after the shredder has gone beyond this lateral obstacle (e.g. a tree), while the trituration device moves along a circle arc, horizontally with respect to the ground. In other words, it is difficult to control the movements of the trituration device around an obstacle, with a shredder of the latter kind.
An object of the present invention is to realise a shredder of a versatile kind, that is such to allow its use under restricted space conditions, without causing problems to the operator during the cutting of weeds, blackberry bushes, etc. in the vicinity of obstacles.

The objects of the invention are attained by means of a drive mechanism of the trituration device, which is connected to the accessories holding arms of the tractor, and which is formed by a support and by the driving device itself, the latter comprising a four-bar linkage, suited to displace the trituration device only on an ideal vertical plane orthogonal to the longitudinal axis of the shredder. The dependent claim 2 concerns a particular embodiment, which at present is preferred.
The dependent claim 3, concerns a particularly advantageous embodiment, according to which the trituration device may be rotated by an angle of 180° together with its driving device, around a hinge having a vertical axis of rotation, said hinge being provided on the upper part of the support of the drive mechanism.
The dependent claim 4 relates to an embodiment in which, in place of hydraulic cylinders-which according to claim 2 are included in the driving device having a four-bar linkage configuration-, there are provided manually controllable means, comprising sleeves with opposite threads at their ends, that is screw couplings, allowing to increase or reduce the overall extension (length) of a combination rod-screw coupling-rod, and having the same function as that of hydraulic cylinders.

The present invention will now be described only for illustrative and non-limitative purposes, with reference to the annexed drawings, which show particular embodiments of the invention, wherein:
Fig. 1 is a lateral partially sectional view of the rear part of a shredder, generally showing the drive mechanism of the trituration device, according to the invention;
Fig. 2 is a rear view of the shredder showing, in broken or continuous lines, various positions of the trituration device, obtainable by means of the drive mechanism of the present invention;
Fig. 3 is a view of a second embodiment of the present invention.

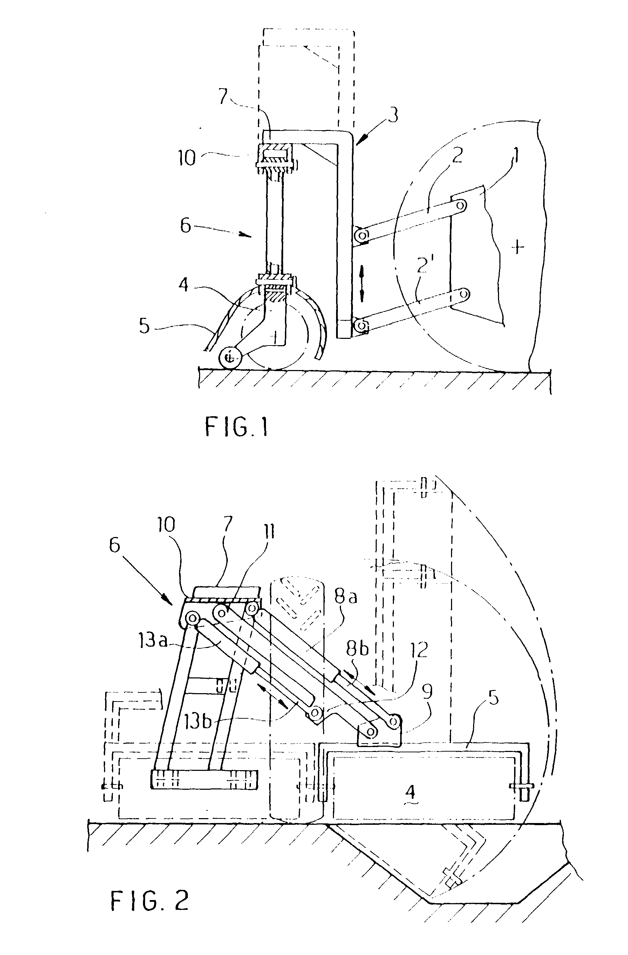

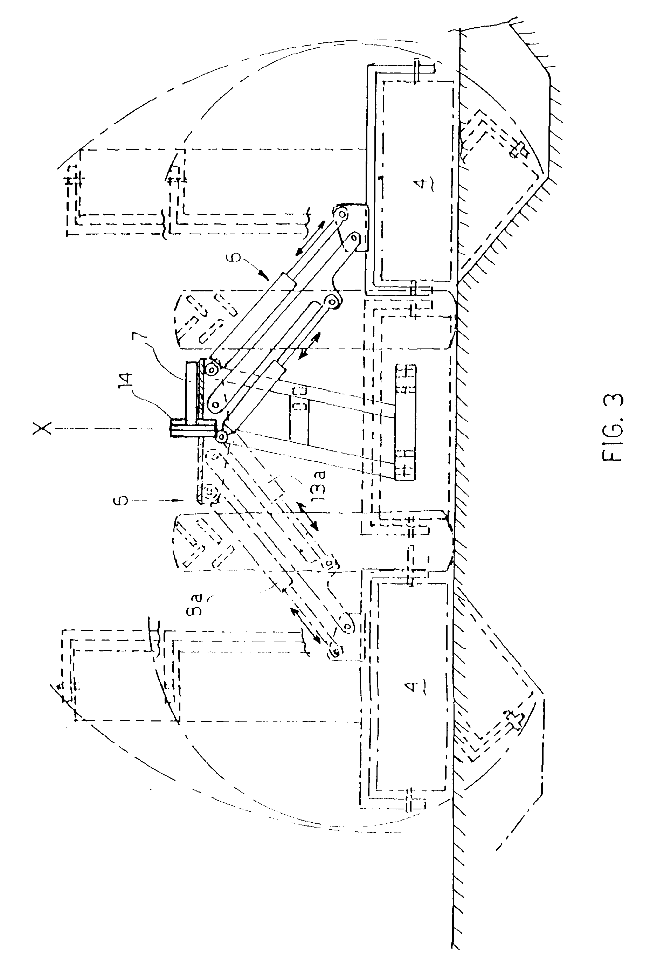

In Fig. 1, the reference number 1 denotes the rear part of the tractor, connected in an articulated manner, by means of accessories holding arms 2, 2', to a vertically movable support 3, as shown by the two positions (see continuos and broken line respectively) and by the double arrow. The arms 2,2' are hydraulically actuated, like a pantograph trolley. This movement is the first movement required for displacing the trituration device 4 which is received inside the protection means 5. The trituration device 4 does not form per se the subject matter of the present patent application, and may correspond to any conventional trituration device whatever. The real driving device 6 of the trituration device 4 is connected to the upper part 7 of the support 3. This device includes a first hydraulic cylinder 8a with a rod 8b, respectively hinged to a bracket 10 on the upper part 7 of the support 3, and to a bracket 9 of the protection means or covering 5 of the trituration device 4. A lever 11 is hinged to said bracket 10, at a first end, and to said bracket 9, at the opposite end. Lever 11 has a projection 12 at an intermediate point between its ends. A rod 13b of a second hydraulic cylinder 13a is hinged, at its free end, to said projection 12 of lever 11.
The operation of the drive mechanism - generally denoted by numeral 6 -, including the two hydraulic cylinders 8a, 13a and the lever 11, will now be described. A lateral displacement of the trituration device 4 with respect to the profile or silhouette of the tractor, may be obtained by actuating the hydraulic cylinder 13a, and maintaining during this operation the distance between the hinges of the hydraulic cylinder 8a always substantially equal to that of the lever 11. In this way, a translation is effected, which is parallel to the ground. Obviously, at the same time, the arms 2,2' must be actuated in order to adjust the distance from the ground. The described movement is not obtainable when conventional-type mechanisms are used.
Instead, as in conventional-type mechanisms, starting from the position commonly referred to as "ZERO-point" position, that is a position parallel to the ground, the trituration device 4 may be rotated both by a negative and by a positive angle, by actuating only the hydraulic cylinder 8a. In particular, when the rod 8b is extracted (extended), a rotation of the trituration device 4 by a negative angle is obtained, whereas, when it is retracted, a rotation by a positive angle of the same device 4 is obtained, until the vertical position is reached, or even beyond the latter, as shown in Fig. 2.
From the above description it will be understood that the trituration device 4 is always displaced on a (ideal) vertical plane, arranged at an invariable distance from the tractor, and which is orthogonal to the longitudinal axis of the latter. This feature allows the operator to avoid possible obstacles, letting at the same time the trituration device easily approach the latter with the maximum accuracy. A skilled person will notice that several modifications could be effected to the device of the present invention, while remaining always within the scope of protection conferred by the present document.
For example, according to Fig. 3, a hinge 14 has been added to the support 3, specifically on its upper part 7, allowing to rotate by 180° the device 6 and the trituration device 4 around the vertical axis X; on the left of the hinge 14, the broken lines denote the position of the device 6 and of the trituration device 4 after said rotation has been performed.
This second embodiment allows the tractor to go in reverse, thereby facilitating the work and reducing the time employed for doing it; therefore, it is also possible for the tractor to work under limited space conditions, by performing its work also on the opposite side (while going in reverse).
While a universal joint transmits the movement of the tractor to the blades of the trituration device, in the example of Figs. 1 and 2, this universal joint is not employed in the embodiment of Fig. 3. Moreover, there is provided a hydraulic control system for the hydraulic cylinders (actuated directly from the tractor), and a hydraulic motor, which is mounted at the position of the hinge 14, will allow to effect said rotation around the vertical axis X.
Finally, it may be observed that the hydraulic cylinders 8a, 13a could also be replaced with manually operable means.
For instance, a combination between a first threaded rod, an intermediate screw coupling, and a second threaded rod, obviously performs the same action as a hydraulic cylinder and its rod.
Moreover, in place of a trituration device, another kind of accessory could also be provided in order to advantageously apply the present inventive concept.

## Claims

1. A drive mechanism for the trituration device (4) of a shredder, characterised in that it comprises a support (3) suited to be connected to the accessories supporting arms (2,2') of a tractor, and a driving device (6) having a four-bar linkage configuration, connected at its upper end to said support (3) and at its lower end to the trituration device (4), wherein said driving device having a four-bar linkage configuration (6) moves the trituration device (4) always on an ideal vertical plane which is orthogonal to the longitudinal axis of the tractor.

2. A drive mechanism for the trituration device (4) of a shredder, according to claim 1, characterised in that said driving device having a four-bar linkage configuration (6) comprises a first hydraulic cylinder (8a) hinged to the support (3) and to the trituration device (4), a lever (11) which is also linked in an articulated manner to the support (3) and the trituration device (4), and a second hydraulic cylinder (13a), which is hinged between the support (3) and a projection (12) of the lever (11), said projection being located between opposite ends of the latter.

3. A drive mechanism according to claim 1 or 2, characterised in that a hinge (14) is provided on the upper part (7) of said support (3), for rotating by 180° said driving device (6) having a four-bar linkage configuration, of the trituration device (4), around the vertical axis (X) of the hinge itself.

4. A drive mechanism according to claim 2 or 3, characterised in that in place of said hydraulic cylinders (8a, 13a) and of the corresponding rods (8b, 13b), there are provided combinations formed by a first threaded rod, a screw coupling, and a second threaded rod.

5. A drive mechanism according to any of the preceding claims, characterised in that the drive mechanism is connected to another kind of accessory instead of to the trituration device (4), for instance to a mowing machine to be used between rows of vines, a miller to be used between rows of vines, or to a seeding machine or a machine for permanent planting of seedlings.
